# EUROPEAN PATENT APPLICATION

(11) **EP 4 786 292 A1**
(43) Date of publication of application: **05.08.2026**
(21) Application number: 24872774.5
(22) Date of filing: 05.09.2024
(51) Int. Cl.: B60W 30/06, B60W 60/00, B60W 40/02, H04W 4/40, G05D 1/221

(54) **METHOD FOR CONTROLLING AUTOMATED VALET DRIVING SYSTEM (AVDS) ACCESS OF VEHICLE BY GLOBAL AVDS SERVER, AND APPARATUS FOR CONTROLLING AUTOMATED VALET DRIVING SYSTEM (AVDS) ACCESS OF VEHICLE BY GLOBAL AVDS SERVER**

(30) Priority: 27.09.2023 KR 20230130656; 27.09.2023 KR 20230130657; 05.01.2024 KR 20240002015; 19.01.2024 KR 20240009011
(71) Applicant: Hyundai Mobis Co., Ltd., Gangnam-gu Seoul 06141 (KR)
(72) Inventor: LEE, Jae Yong, Yongin-si, Gyeonggi-do 16891 (KR)
(74) Representative: Jung, Minkyu
(86) International application number: PCT/KR2024/013437
(87) International publication number: WO 2025/071066

(57) **Abstract**

A method for controlling automated valet driving system (AVDS) access of a subject vehicle (SV) by a global AVDS server, and an apparatus therefor. The method includes: transmitting and receiving information between a global AVDS server and at least one local AVDS server; controlling autonomous driving of the subject vehicle (SV); wherein the global AVDS server manages each local AVDS server, transmits/receives data to/from at least one of a vehicle backend (VB) and a user backend (UB), wherein the at least one local AVDS server is a sub-AVDS server and the at least one local AVDS server transmits/receives data to/from at least one of the global AVDS server or a value added system (VA), wherein the VA includes at least one of a charging station for the SV and a car wash for the SV.

## Description

### [Technical Field]

The embodiments of the present disclosure relate to a method and apparatus for performing automated valet driving of a vehicle.

### [Background Art]

An automated valet driving system (AVDS) includes a user, a system, and an autonomous vehicle. The AVDS may transfer an autonomous driving control authority from the user to the autonomous vehicle. The AVDS can perform valet driving control using an autonomous driving function. In order to control the vehicle to perform valet driving by the AVDS, an efficient control method and the like are required.

### [Disclosure]

### [Technical Problem]

An object of the present disclosure is to provide an apparatus and method for efficiently performing automated valet driving of a vehicle.

Another object of the present disclosure is to provide a method and apparatus for performing automated valet driving by allowing a vehicle to perform autonomous driving, thereby safely and efficiently performing valet driving of a vehicle.

Technical subjects to be solved by the present disclosure are not limited to the above-mentioned technical solutions, and it should be noted that other technical subjects not described above can be understood by those skilled in the art from the description of the present disclosure below.

### [Technical Solution]

In a general aspect of the disclosure, a method for controlling automated valet driving system (AVDS) access of a subject vehicle (SV) by a global AVDS server, includes: transmitting and receiving information between a global AVDS server and at least one local AVDS server; controlling autonomous driving of the subject vehicle (SV); and managing, by the global AVDS server, each local AVDS server and transmitting/receiving data to/from at least one of a vehicle backend (VB) and a user backend (UB), wherein the at least one local AVDS server comprises a sub-AVDS server arranged for each region, and is configured to transmit/receive data to/from at least one of the global AVDS server and a value added system (VA), and wherein the value added system (VA) includes at least one of a charging station for the SV and a car wash for the SV.

### [Advantageous Effects]

The method/apparatus according to the embodiments can perform autonomous valet driving of a vehicle efficiently.

The method/apparatus according to the embodiments can perform autonomous valet driving of a vehicle safely.

The method/apparatus according to the embodiments can perform autonomous valet driving of a vehicle accurately.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure.
FIG. 1 is a conceptual diagram illustrating an example of a basic flow of an automated valet driving system (AVDS) according to the embodiments of the present disclosure.
FIG. 2 is a schematic diagram illustrating an example of a system architecture associated with a method and apparatus according to the embodiments of the present disclosure.
FIG. 3 is a block diagram illustrating an example of a vehicle control device according to the embodiments of the present disclosure.
FIG. 4 is a diagram illustrating an example structure of a vehicle according to the embodiments of the present disclosure.
FIG. 5 is a diagram illustrating an example of a global AVDS server and/or a local AVDS server according to the embodiments of the present disclosure.
FIG. 6 is a diagram illustrating example operations of a global AVDS server when making AVDS reservation according to the embodiments of the present disclosure.
FIGS. 7a and 7b are diagrams illustrating example operations of a global AVDS server during AVDS check-in according to the embodiments of the present disclosure.
FIGS. 8a and 8b are diagrams illustrating example operations of a global AVDS server during AVDS handover according to the embodiments of the present disclosure.
FIG. 9 is a diagram illustrating the configuration and function of a system of an AVDS server according to the embodiments of the present disclosure.
FIG. 10 is a flowchart illustrating a method for controlling AVDS access of a vehicle by a global AVDS server according to the embodiments of the present disclosure.
FIG. 11 is a diagram illustrating example operations of a global AVDS server during electric vehicle (EV) charging according to the embodiments of the present disclosure.
FIG. 12 is a diagram illustrating example operations of the global AVDS server during EV charging according to the embodiments of the present disclosure.
FIG. 13 is a diagram illustrating example operations of the global AVDS server during parking according to the embodiments of the present disclosure.
FIG. 14 is a diagram illustrating example operations of the global AVDS server during parking according to the embodiments of the present disclosure.
FIG. 15 is a flowchart illustrating a method for allowing the global AVDS server to control the AVDS mission to be performed by the SV according to the embodiments of the present disclosure.

### [Best Mode]

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

Although most terms of elements in this specification have been selected from general ones widely used in the art taking into consideration functions thereof in this specification, the terms may be changed depending on the intention or convention of those skilled in the art or the introduction of new technology. Some terms have been arbitrarily selected by the applicant and their meanings are explained in the following description as needed. Thus, the terms used in this specification should be construed based on the overall content of this specification together with the actual meanings of the terms rather than their simple names or meanings.

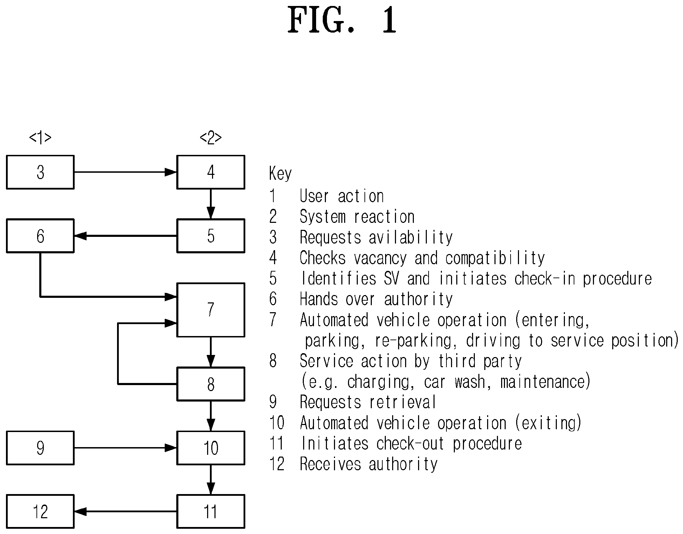

FIG. 1 is a conceptual diagram illustrating an example of a basic flow of an automated valet driving system (AVDS) according to the embodiments of the present disclosure.

FIG. 1 shows the basic flow of an AVDS (Automated Valet Driving Systems). AVDS refers to a use case and operational design domain (ODD) extension of ISO 23374-1 automated valet parking system (AVPS). The AVDS contributes to realization of safe and reliable low-speed Level-4 unmanned operation of vehicles, and facilitates rapid and smooth market introduction of the future L4 system based on experiences gained with AVDS at low speeds in a well-defined ODD.

The automated valet parking system (AVPS) provides low-speed automated valet parking services to owners of vehicles. The AVPS service is not limited to driverless driving within dedicated parking facilities and allows driverless driving in designated outdoor spaces. Basically, both the AVPS and the AVDS are used to conceptually implement a journey (movement) from point A to point B.

One example use case handled by the AVDS is valet parking for use in an airport terminal. Whereas AVPS describes SAE L4 driving for use in a dedicated parking facility, AVDS extends a drop-off area to external areas located outside the parking facility. After the driver of a vehicle leaves the AVDS drop-off area of the designated area, the system may automatically guide a vehicle on public roads to the entrance of the parking facility. At the entrance of the parking facility, the system may guide the vehicle to an empty parking space or, if necessary, to another space. Examples of the space of interest that can be handled by the AVDS may include, for example, electric charging stations, car washes, or may include a vehicle driving case in company premises for logistics purposes, etc.

AVDS is expected to achieve end-user benefits in terms of time saving, stress reduction, reduction in energy consumption of the vehicle, and to meet user expectations for many low-speed operable functions. The AVDS may enable the driver of a vehicle to recognize an automatic charging process of the electric vehicle without unnecessary time consumption of the driver, and may efficiently optimize utilization of charging stations. The AVDS in the company's premises can reduce labor costs using an unmanned vehicle control system.

To contribute to realization of safe and reliable unmanned AVDS operation, the requirements specified in this patent document are based on performance of the stateof-the-art technology currently available. Therefore, this part will be revised in the future as technology improves.

The embodiments of the present disclosure include specific technical solutions for communication interfaces (e.g., communication methods, message protocols) due to differences in technologies (e.g., spectrum allocation) that are available and commonly used worldwide. Thus, in order to ensure interoperability, these specific technical solutions of the embodiments are linked to communication interfaces at national/regional levels.

The automated valet parking system (AVPS) may perform Level-4 autonomous driving of one or more unoccupied vehicles at speeds less than 30 km/h within a designated operating area.

The embodiments specify system frameworks, operational sequences and communication interfaces, performance requirements for operation and management functions, environmental conditions within the operating area, and test procedures to verify performance requirements of the AVDS.

AVDS is considered a use case and ODD (operational design domain) extension of ISO 23374-1, including indoor and outdoor applications. AVDS may enable unmanned operation on company premises and outdoor valet parking on public roads (e.g., valet parking from airport terminals to parking lots), and may also enable additional services. In addition, AVDS may be applied to an example of vehicle driving in the charging stations for electric vehicles or an example of vehicle driving in car washes.

AVDS consists of physically separate subsystems distributed among vehicles, facility equipment, and user domains. The functionality of AVDS is realized by cooperation of these subsystems. In most cases, these AVDS functions are provided by different organizations. The present embodiment includes system architectures implemented using subsystem-to-subsystem communication interfaces at a logical level.

AVDS manages system participants (e.g. AVDS-compatible vehicles, facilities and users) and provides necessary interfaces between the system participants. Embodiments include requirements for various management functions, for example, a function of verifying compatibility between vehicles and premises, a function of performing remote assistance and recovery when autonomous driving is not possible, and a function of issuing shutdown commands in response to actions of other facility users. In addition, AVDS is also intended for use by service providers or facility operators who have received vehicle authorization from individual service recipients.

### Embodiments may refer to the following standard documents:

ISO 23374-1, Intelligent transport systems - Automated valet parking systems (AVPS) - Part 1: System framework, requirements for autonomous driving, and communication interface
ISO 20900, Intelligent transport systems - Partially Automated Parking Systems (PAPS) - Performance Requirements and Test Procedures
ISO 8608 Mechanical vibration - Road surface profiles - Reporting of measured data
ISO 19206-2, Road vehicles - Test devices for target vehicles, vulnerable road users and other objects, for assessment of active safety functions - Part 2: Requirements for pedestrian targets
ISO 19206-4 Road vehicles - Test devices for target vehicles, vulnerable road users and other objects, for assessment of active safety functions -- Part 4: Requirements for bicyclist targets.

### Definitions of terms according to the embodiments are as follows:

Service provider of AVDS: An organization that provides the AVDS to operate an unmanned vehicle (driverless vehicle). User of AVDS: An individual service recipient who transfers/recovers rights (3.3) to/from the service provider through AVDS Authority: The rights and abilities to perform specific tasks in a subject vehicle (SV). Subject Vehicle (SV): A vehicle equipped with a vehicle operation subsystem of AVDS Premises: Public or private areas where AVDS is made available. Parking facility: A public or private parking lot with AVDS capability. Operation zone: A geographic area within an AVDS-compliant premises where autonomous driving can be performed. Drop-off area: A location within an operating area where a user leaves the subject vehicle (SV) and transfers authority over the SV to a service provider. Pick-up area: A location within the operating area where the service provider transfers the SV for user boarding and hands over authority. Parking spot: A destination within a work area where one vehicle can be parked or temporarily stored. Stop point: A destination within the work area where the SV stops and remains under certain state conditions, depending on the considered use case. Parking area: An area within the operating area consisting of multiple parking spaces. The present disclosure relates to a vehicle equipped with a vehicle operation subsystem of a subject vehicle (SV): an AVDS. Destination: A location within the work area, to which the SV is transported. Route: A planned course of the SV from a departure to a destination. Path: A planned sequence of way points for the SV to follow. Trajectory: A planned route containing time information. Definitions of terms for use in the automated valet parking facility are as follows: PFE: Physical equipment installed in parking facilities to support AVPS. Definitions of terms for use in the automated valet driving premises equipment are as follows. DPE: Physical equipment installed in the operating area of AVDS premises to support the AVDS. Coded Marker: A physical or logical marker using a unique ID installed on the AVDS premises that can be detected by the SV to support localization. Anonymous marker: A physical or logical marker without a unique ID installed on the AVDS premises that can be detected by the SV to support localization. Designed speed: A situational speed of a vehicle designed to drive in a given situation (e.g. traffic situation, environmental conditions) determined by AVDS. Designed distance: A situational physical distance by design from the SV (to be maintained by the AVDS in a given situation during autonomous driving of the vehicle) to other facilities, road uses, objects or structures. Subsystem: A logical level of AVDS components that contains one or more functions. Function: A function of AVDS that is used to process input signals for the system and to convert the input signals into appropriate output signals. (Autonomous driving service) Reservation: Basic agreement between the user and the service provider regarding the operation and management of SV within specific premises. (Automated valet Driving) Session: Interaction sequence for a given SV between check-in and check-out. (Automated valet Driving) Mission: A series of interactions in which the SV is automatically operated by AVDS from a parking location to a destination for a specific purpose. (Test) Scenario: A description of a complete course from a point of departure to a destination. This (test) scenario is to be performed for testing. (Test) Scene: A description of specific events to be performed for the test, not including the point of departure or the destination. System Operator (SO): The role of the organization that manages vehicle operations in the operational area of the AVDS premises. This includes tasks that are monitored while being performed automatically or tasks to be manually performed by an individual at a remote location. Premises Manager (PM): The role of an organization that maintains work areas in an operable and safe condition according to AVDS requirements. Orchestration System (OS): A system that classifies a session or multiple connected sessions into a single mission and arranges the executable and optimized sequence of these missions. Value added service system (VA): The role of a service system that provides dedicated service management and a communication interface for AVDS.

### Definitions of abbreviations according to the embodiments are as follows:

ADS: Autonomous driving System, DDT: Dynamic Driving Task, OEDR: Object and Event Detection and Response: ODD: Operational Design Domain, SV: Subject Vehicle, FV: Forward Vehicle, PFE: Automated valet Parking Facility Equipment, DPE: Automated valet Driving Premises Equipment, VMC: Vehicle Motion Control, DSRC: Dedicated Short Range Communication, VRU: Vulnerable Road User, RO: Remote vehicle Operation (subsystem), VO: On-board Vehicle Operation (subsystem), UF: User Frontend (subsystem), UB: User Backend (subsystem), VB: Vehicle Backend (subsystem), OB: Operator Backend (subsystem), PM: Automated valet Parking facility Management (subsystem), DM: Automated valet Driving premises Management (subsystem), VA: Value added service system.

FIG. 1 shows a basic flow of the AVDS based on user actions and system responses. FIG. 1 is a diagram illustrating a representative use case showing the flow in which a user initially transfers authority to a service provider.

In the AVDS, a user can request additional services (e.g. EV charging, car washing) to be performed while the authority of the subject vehicle (SV) remains with the AVDS service provider. The requested service and earliest pickup time can be communicated to the system along with the reservation. While the authorities are already with the AVDS service provider, additional services may be requested depending on the remaining period.

These sessions, which include additional services, consist of more missions and tasks than AVPS. For example, these services may be arranged in the order of parking • waiting • charging • parking • waiting • washing • parking. Configuring the mission within a given time with the order of the requested service is the task of the orchestration system. Additional services are treated as additional missions. The vehicle is driven to a designated location where the service is performed, so that the vehicle is re-parked at an initial parking place or another place. Re-parking occurs automatically after the requested service is completed (e.g., charging is completed, car washing is completed), and there is a parking space available for the next service or is a parking space available for re-parking. In this case, no user request is required. For each additional service, the compatibility between the vehicle and the corresponding service should be checked. To this end, geometric characteristics (e.g., vehicle height, width, length, charging plug location, etc.), electrical characteristics (e.g. plug type, charging power, requested charge level, etc.) and other specific service characteristics are required.

Referring to FIG. 1, reference numeral <1> represents user actions, and reference numeral <2> represents system reactions. The AVDS services can be provided according to the user actions <1> and the system reactions <2>. The autonomous driving methods and devices according to the embodiments of the present disclosure may correspond to user equipment (UE) for user actions and/or a system for system reactions. The autonomous driving method and device according to the embodiments may hereinafter be referred to as an automated valet driving method/apparatus, and more briefly, referred to as only "method/apparatus".

A method/apparatus according to the embodiments may receive a request from a user. The method/apparatus according to the embodiments may check empty spaces for valet driving and compatibility for valet driving. The method/apparatus according to the embodiments may identify the subject vehicle (SV) and activate a check-in process. The method/apparatus according to the embodiments may receive autonomous driving authority from a user. The method/apparatus according to the embodiments may perform automated vehicle operations. For example, operations according to the embodiments may include entering, parking, re-parking, and driving to a service position. The method/apparatus according to the embodiments may selectively perform service actions by a third party. For example, there may be charging, car washing, maintenance, etc. The method/apparatus according to the embodiments may allow the user to submit a retrieval request. The method/apparatus according to the embodiments may perform autonomous vehicle operations. For example, the method/apparatus can perform the exit function. The method/apparatus according to the embodiments may activate a check-out procedure. The method/apparatus according to the embodiments transfers authority to a user.

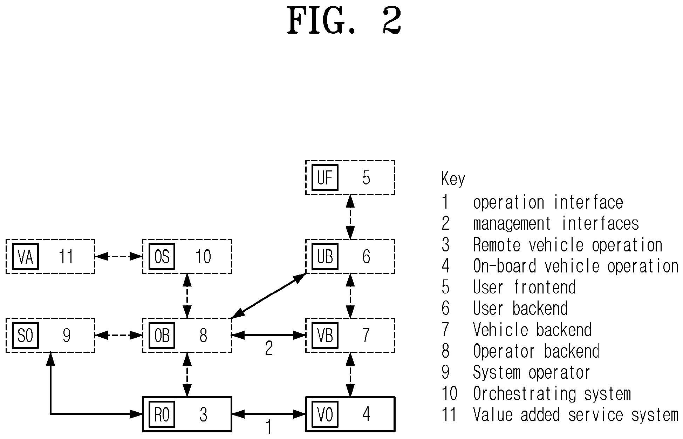

FIG. 2 is a schematic diagram illustrating an example of a system architecture associated with the method and apparatus according to the embodiments of the present disclosure.

FIG. 2 shows a system structure related to the method and apparatus for performing the basic flow of AVDS (Automated Valet Driving Systems) of FIG. 1.

FIG. 2 shows a logical structure of the AVDS subsystem. Implementation of logical subsystems for physical components may vary depending on the system design. Additionally, a subsystem may consist of multiple physical components. For example, a remote vehicle operation subsystem may consist of sensors, control devices, and communication devices.

The system according to the embodiments may perform and include the method/apparatus according to the embodiments. For example, the AVDS device/system of the method/apparatus according to the embodiments may include an operator backend (OB), an orchestrating system (OS), and/or a remote vehicle operation (RO). The AVDS device/system according to the embodiments may correspond to a server. The user equipment (UE) of the method/apparatus according to the embodiments may include a user frontend (UF) and/or a user backend (UB). The vehicle of the method/apparatus according to the embodiments may include a vehicle backend (VB), and/or an on-board vehicle operation (VO). The system of the method/apparatus according to the embodiments may further include a value added service system (VA) and/or a system operator (SO). Operations according to the embodiments may be performed by each component of the system of FIG. 2. Each component of the system of FIG. 2 may correspond to hardware, software, processor, and/or a combination thereof.

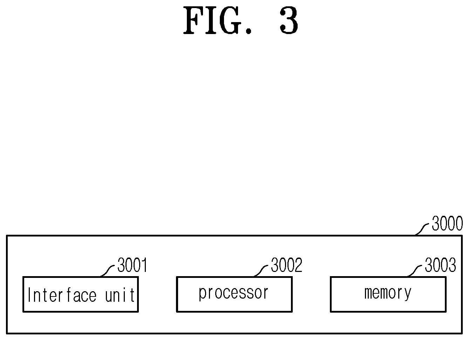

FIG. 3 is a block diagram illustrating an example of a vehicle control device 3000 according to the embodiments of the present disclosure.

Referring to FIG. 3, the vehicle control device 3000 according to the embodiments is a device designed to control the operation of a vehicle. The vehicle control device may be referred to as an autonomous driving integrated controller 600. The vehicle control device may include an interface unit 3001, a processor 3002, and a memory 3003.

The memory may store instructions, signaling information, data, etc. for performing various operations according to embodiments. The memory may be connected to the interface unit and the processor, so that the memory can transmit and receive necessary signals to and from the interface unit and the processor.

The interface unit may receive signals, information, data, etc. from the vehicle control device and transmit the same to the memory and/or the processor. Additionally, signals, information, data, etc. generated by the memory and/or the processor may be transmitted to the vehicle, the driver and/or passengers.

The processor may perform vehicle control operations based on data and/or instructions stored in the memory.

The vehicle control device of FIG. 3 may correspond to a device mounted on a vehicle or a terminal device that controls the vehicle.

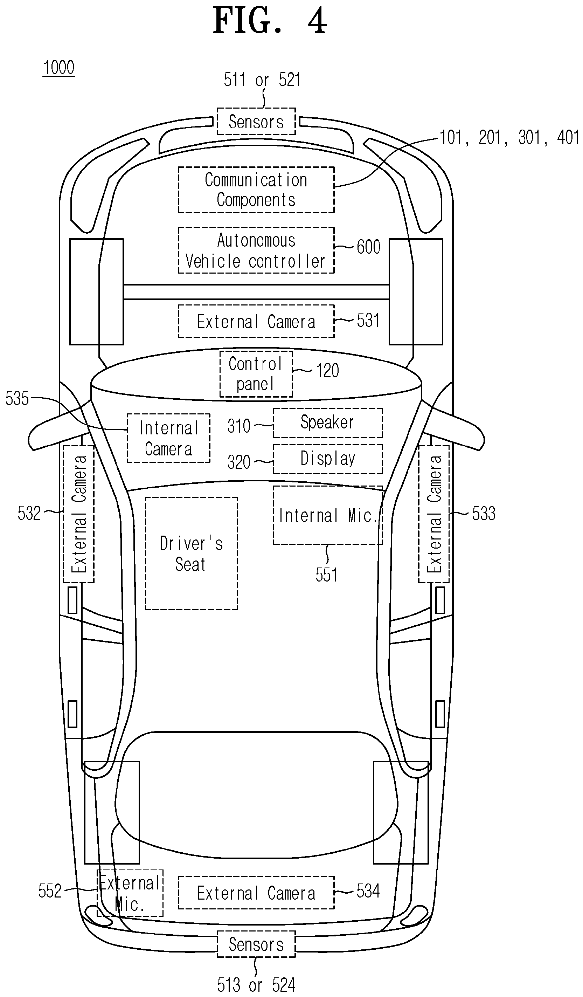

FIG. 4 is a diagram illustrating an example structure of a vehicle according to the embodiments of the present disclosure.

The vehicle according to the embodiments may be configured as shown in FIG. 4 and may perform autonomous driving using an autonomous driving control system. Vehicles according to the embodiments may be referred to as autonomous vehicles, robots, urban air mobility (UAM), autonomous driving devices, etc.

The autonomous vehicle 1000 can be implemented using an autonomous driving integrated controller 600 (denoted by "autonomous vehicle controller" in FIG. 4) that transmits and receives data required to control autonomous driving control of the vehicle through an operation information input interface 101, a driving information input interface 201, a passenger output interface 301, and a vehicle control output interface 401. However, the autonomous driving integrated controller may be referred to as a controller or a processor, or may be referred to as a controller simply.

The autonomous driving integrated controller may acquire, through the driving information input interface, driving information generated by manipulation of a passenger who handles a user input unit during the vehicle's autonomous driving mode or manual driving mode. The user input unit may include a driving mode switch and a control panel 120 (e.g., a navigation terminal mounted in the vehicle, a smartphone or tablet computer carried by the passenger, etc.), and thus the operation information may include information about the vehicle's driving mode and navigation information.

In addition, the autonomous driving integrated controller may provide not only driving status information but also warning information to the driver through the passenger output interface when it is determined that a warning is required for the driver in the autonomous driving mode or the manual driving mode. The autonomous vehicle 1000 may include a speaker 310 for audibly outputting such driving status information and warning information and a display device 320 for visually outputting the driving status information and warning information. At this time, the display device may be implemented as the same device as the control panel described above, or may be implemented as a separate independent device.

Additionally, the autonomous driving integrated controller may transmit, through the vehicle control output interface, control information for vehicle driving control in the vehicle's autonomous driving mode or manual driving mode to a low-order control system (also called a sub-control system) applied to the vehicle. The sub-control system for controlling vehicle driving may include at least one of a motor control system, an engine control system, a braking control system, and a steering control system. The autonomous driving integrated controller may transmit at least one of motor control information, engine control information, braking control information, and steering control information as control information to each sub-control system through the vehicle control output interface.

The autonomous driving integrated controller may acquire operation information caused by the driver's manipulation through the operation information input interface, and may acquire vehicle driving information indicating a driving status of the vehicle through the driving information input interface. The autonomous driving integrated controller may provide driving status information and warning information that are generated according to the autonomous driving algorithm through the passenger output interface.

Meanwhile, in order to ensure stable autonomous driving of the vehicle, the autonomous driving device according to the embodiments may include a sensor unit for detecting objects around the vehicle, such as surrounding vehicles, pedestrians, roads, or fixed facilities (e.g., traffic lights, signposts, traffic signs, construction fences, etc.).

The sensor unit may include one or more of a Lidar sensor, a radar sensor, and a camera sensor to detect surrounding objects outside the vehicle. For example, the sensor unit may include a front Lidar sensor 511, a front radar sensor 521, a rear Lidar sensor 513, a rear radar sensor 524, a left camera sensor 532, a right camera sensor 533, an internal camera sensor 535, a front camera sensor 531, a rear camera sensor 534, etc. The sensor unit may be connected to microphones (551, 552).

Embodiments of the present disclosure may provide a method and apparatus for determining an airport terminal in which the vehicle will park by the automated valet driving system (AVDS), and for convenience of description, the above method and apparatus will hereinafter be referred to as "method/apparatus".

Embodiments of the present disclosure relate to international standards ISO 23374-1 (Automated Valet Parking System, AVPS) and ISO 12768-1 (Automated Valet Driving System, AVDS). The embodiments of the present disclosure provide a method for enabling the AVPS or the AVDS to determine a parking destination (hereinafter referred to as "destination") of an ADS vehicle (having the same concept as the subject vehicle SV).

In the related art, for example, the international standards ISO 23374-1 or ISO 12768-1 have not specifically disclosed a method for determining the airport terminal in which the ADS vehicle will park by the AVPS or AVDS. In order to address this issue, the embodiments may provide a method and apparatus for determining an airport terminal at which a vehicle will park by the AVPS or AVDS.

The AVDS (system/server/processor) for use in the method/apparatus according to the embodiments may include a method for determining an airport terminal in which the ADS vehicle will park, and may perform this method.

For example, the method/apparatus according to embodiments may include a method for determining the airport terminal by considering illuminance, weather, etc., and the method/apparatus may perform this method. Additionally, the embodiments of the present disclosure may include a method for determining the terminal in consideration of the electric charge level, and may perform the method. Further, the embodiments of the present disclosure may include a method for determining the terminal based on the driver's (user's) presetting, and this method can then be performed. According to the embodiments, the AVDS may provide the effect of parking the ADS vehicle in a reasonable location for each situation/condition, rather than simply parking the ADS vehicle in a parking lot close to a pick-up area. Therefore, the AVDS may be the safe and cost-effective and may also provide high user satisfaction.

The ISO 23374-1 (Automated Valet Parking System, AVPS) international standard has disclosed a method for controlling the AVPS mission of the subject vehicle (SV) by the AVPS, and the ISO 12768-1 (Automated Valet Driving System, AVDS) international standard has disclosed a method for controlling the AVDS mission of the SV by the AVDS.

In the related art, although ISO 23374-1 or ISO 12768-1 has disclosed examples of a logic in which the global AVDS server controls the AVPS/AVDS missions of the SV by communicating with major subsystems of the AVDS, the scope or spirit of the present disclosure is not limited thereto and the related art has difficulty in sufficiently explaining the specified system architecture.

The embodiments provide a method for allowing the global AVDS server to control the AVDS access of the SV by communicating with the major AVDS subsystems. Embodiments have been described in terms of an AVDS Type 2, but are not limited to Type 2. Embodiments may include a method for a global AVDS server to transmit and receive information to/from AVDS major subsystems (particularly, a local AVDS server) and control a subject vehicle (SV)'s AVDS access during a global AVDS server operation in AVDS reservation, during a global AVDS server operation in AVDS check-in, and/or during AVDS handover.

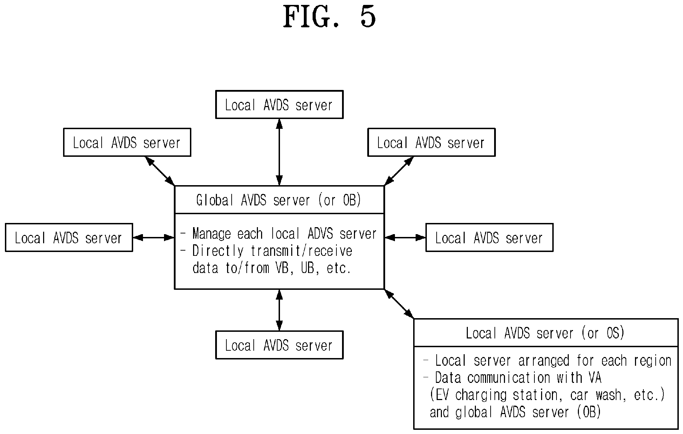

FIG. 5 is a diagram illustrating an example of a global AVDS server and/or a local AVDS server according to the embodiments of the present disclosure.

The AVDS of FIG. 1, the device of FIG. 2, the vehicle control device of FIG. 3, and the vehicle of FIG. 4 can control the vehicle in conjunction with the global AVDS server and the local AVDS server of FIG. 5.

The global AVDS server manages local AVDS servers for each region and performs a function of directly communicating with a vehicle backend (VB), a user backend (UB), etc. The global AVDS server may be referred to as an operator backend (OB). The global AVDS server is connected to at least one local AVDS server and can manage the local AVDS server(s).

The local AVDS server is a local server deployed for each region, and may perform a function of data communication with value added systems (VA) (e.g., EV charging station, car wash, etc.) and the global AVDS server (OB). The local AVDS server may be referred to as an orchestrating system (OS).

How the global AVDS server performs the SV's AVDS mission while communicating with the local AVDS server will be described with reference to the attached drawings.

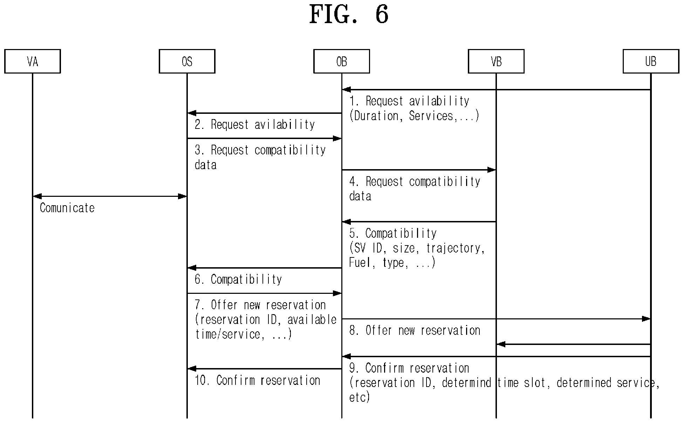

FIG. 6 is a diagram illustrating example operations of the global AVDS server when making AVDS reservation according to the embodiments of the present disclosure.

AVDS reservation by the global AVDS server can be performed by steps 1 to 10 of FIG. 6.

In association with step (1) of FIG. 6, a method for making AVDS reservation through AVDS access control of a vehicle by a global AVDS server (OB) may include requesting availability. For example, a UB may request availability from the OB. The availability may include a parking period (Duration) and/or desired services (Services).

In association with step (2) of FIG. 6, a method for performing AVDS reservation through AVDS access control of a vehicle by the global AVDS server may further include requesting the availability. For example, the OB may request the availability from the OS. As in step (1), the availability may include a parking period (Duration) and/or a desired service (Services), etc. The availability including the parking period (Duration) and/or a desired service (Services), etc. may be transmitted to the OS. According to embodiments, the availability of step 1 and the availability of step 2 may be the same. According to embodiments, the availability of step 1 and the availability of step 2 may be different from each other. In this case, the availability of step 2 may include additional information than that of the availability of step 1. For example, the availability of step 2 may further include (i) information about the ID of the UB and/or (ii) information about a time point at which the OB has received the value of 1.

In association with step (3) of FIG. 6, the AVDS reservation method through AVDS access control of the vehicle by the global AVDS server may further include requesting compatibility data. For example, the OS may request compatibility data from the OB. The compatibility data may be information about the ID, size, and/or fuel type of the vehicle. The initial request for the compatibility data may be performed by a value added system (VA). The type of information included in the compatibility data may vary depending on the VA. For example, some VAs may request information such as model information (manufacturer/year) of the vehicle as the compatibility data instead of the size and/or fuel type of the vehicle.

In association with step (4) of FIG. 6, the AVDS reservation method through AVDS access control of a vehicle by a global AVDS server may further include requesting compatibility data. For example, the OB may request compatibility data from the VB. The compatibility data of step 4 may be identical to the compatibility data of step 3. The compatibility data of step 4 may be different from the compatibility data of step 3. In this case, the compatibility data of step 4 may further include information about a VB ID, etc.

In association with step 5 of FIG. 6, the AVDS reservation method through AVDS access control of a vehicle by a global AVDS server may further include receiving the compatibility data. For example, the OB may receive compatibility data from the VB. The compatibility data may include information about an ID, a size, and/or a fuel type of the vehicle.

Referring to step 5 of FIG. 6, the AVDS reservation method through AVDS access control of the vehicle by the AVDS server may further include receiving compatibility data. For example, OB may receive compatibility data from VB. The compatibility data may include information about an ID, a size, and/or a fuel type of the vehicle.

In association with step (6) of FIG. 6, the AVDS reservation method through AVDS access control of a vehicle by a global AVDS server may further include transmitting the compatibility data. For example, the OB may transmit the compatibility data to the OS.

In association with step (7) of FIG. 6, the AVDS reservation method through AVDS access control of a vehicle by a global AVDS server may further include receiving new reservation information. For example, the OS may propose a new reservation to the OB. The new reservation information may include at least one of a reservation ID, available timeslots, available services (e.g., EV charging, car wash, etc.), and/or service costs. The new reservation information may vary depending on the VA. For example, an EV charging station may configure available timeslots in units of 1 hour, and a car wash may configure available timeslots in units of 30 minutes.

In association with step (8) of FIG. 6, the AVDS reservation method through AVDS access control of a vehicle by a global AVDS server may further include transmitting new reservation information. For example, the OB may propose new reservation information to the UB. The new reservation information of step 8 may be identical to the new reservation information of step 7. The new reservation information of step 8 may be different from the new reservation information of step 7. In different cases, the new reservation information of step 8 may include additional information. For example, the new reservation information of step 8 may further include (i) the ID of the OS and/or (ii) the ID of the UB.

In association with step (9) of FIG. 6, the AVDS reservation method through AVDS access control of a vehicle by a global AVDS server may further include receiving reservation confirmation information. For example, the UB may transmit reservation confirmation information to the OB, and the UB may transmit reservation confirmation information to the VB. The reservation confirmation information may include at least one of a reservation ID, a determined timeslot, and a determined service.

In addition, although FIG. 6 illustrates that VB does not receive new reservation information but only receives reservation confirmation information from the UB, the scope or spirit of the present disclosure is not limited to the embodiment in which the VB does not receive new reservation information. That is, the VB may also receive new reservation information, and the VB and/or the UB may transmit reservation confirmation information to the OB. In addition, the UB may transmit reservation confirmation information to the OB without transmitting the reservation confirmation information to the VB.

In association with step (10) of FIG. 6, the AVDS reservation method through AVDS access control of a vehicle by a global AVDS server may further include transmitting reservation confirmation information. For example, the OB may transmit reservation confirmation information to the OS. The reservation confirmation information may include at least one of a reservation ID, a determined timeslot, and a determined service. The reservation confirmation information of step 10 may be the same as the reservation confirmation information of step 9. The reservation confirmation information of step 10 may be different from the reservation confirmation information of step 9. In different cases, the reservation confirmation information of step 10 may include additional information.

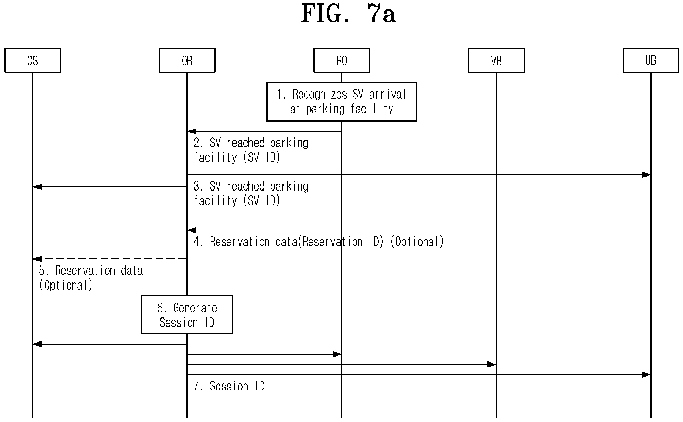

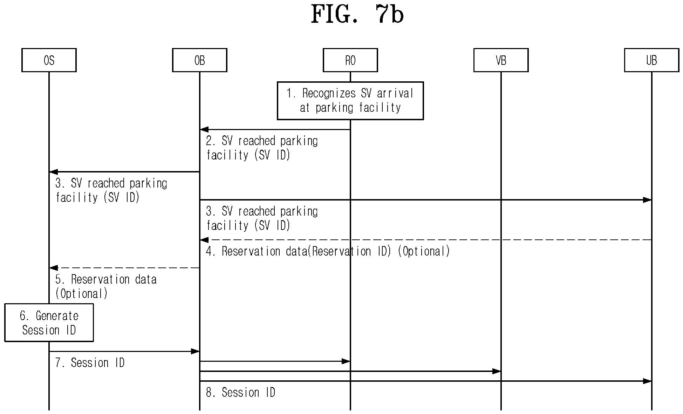

FIGS. 7a and 7b are diagrams illustrating example operations of the global AVDS server during AVDS check-in according to the embodiments of the present disclosure.

AVDS check-in by the global AVDS server may be performed by steps 1 to 7 of FIG. 7a. In association with step (1) of FIG. 7a, the AVDS check-in method through AVDS access control of the vehicle by the global AVDS server may include recognizing whether the SV arrives at the EV charging station (hereinafter, "charging station") by the RO. The RO may detect whether the SV has arrived at the parking facility or an operation zone of the parking facility through a sensing module of the parking facility.

In association with step 2 of FIG. 7a, the AVDS check-in method through AVDS access control of the vehicle by the global AVDS server may further include transmitting information indicating that the SV has arrived at the parking facility from the RO to the OB. The information notifying that the SV has arrived at the parking facility may include an SV ID, etc.

In association with step (3) of FIG. 7a, the AVDS check-in method through AVDS access control of a vehicle by the global AVDS server may further include transmitting information notifying that the SV has arrived at a parking facility from the OB to the OS and/or from the OB to the UB. The information notifying that the SV has arrived at the parking facility may include an SV ID, etc.

In association with step 4 and/or 5 of FIG. 7a, the AVDS check-in method through AVDS access control of a vehicle by the global AVDS server may further include transmitting reservation data from the UB to the OB and/or from the OB to the OS. The reservation data may include a reservation ID, etc. The reservation data may be transmitted from the UB to the OB and the OS. Step 4 and/or step 5 may be optional. For example, as shown in FIG. 6, since the reservation data including the reservation ID, etc. may be stored in the OB and/or the OS, the OB that has identified the SV ID may immediately generate a session ID.

In association with step 6 of FIG. 7a, the AVDS check-in method through AVDS access control of a vehicle by a global AVDS server may further include generating a session ID by the OB. The OB may generate a session ID related to the reservation.

In association with step 7 of FIG. 7a, the AVDS check-in method through AVDS access control of a vehicle by a global AVDS server may further include transmitting a session ID from the OB to the RO, the VB, the UB and/or the OS. The OB may transmit the session ID to the RO, the VB, the OS and/or the UB. According to embodiments, the transmitting operation to at least one of the RO, the VB, the OS and/or the UB may be optional. For example, the session ID may not be transmitted from the OB to the RO.

FIG. 7b is the same as FIG. 7a, but illustrates an example in which the session ID of step 6 is generated by the OS, not by the OB. The session ID may be generated by at least one of the OB or the OS.

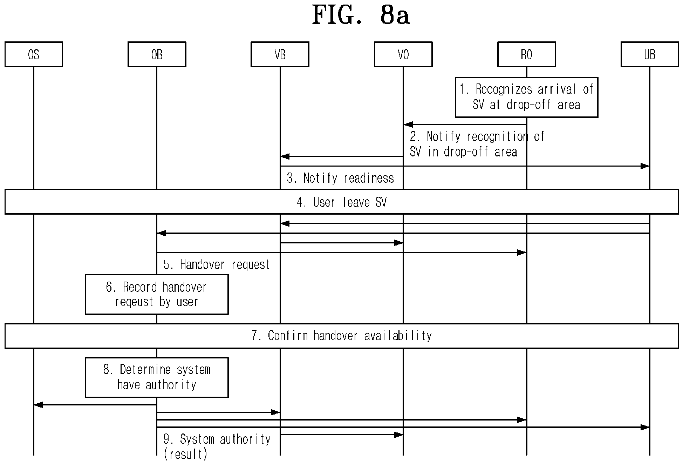

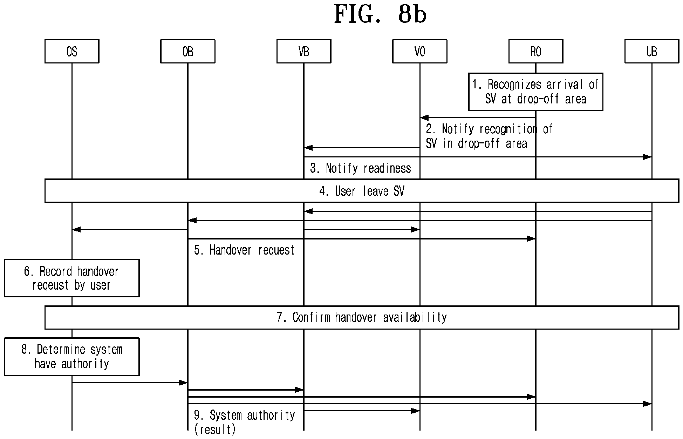

FIG. 8a and FIG. 8b illustrate the operation of the global AVDS server during AVDS handover according to the embodiments of the present disclosure.

The AVDS handover of the global AVDS server may be performed by steps 1 to 9 of FIG. 8.

In association with step 1 of FIG. 8a, the AVDS handover method through AVDS access control of a vehicle by a global AVDS server may include recognizing that the SV has arrived at a drop-off area by the RO. The RO may recognize that the SV has arrived at a drop-off area through a sensing module in the drop-off area, such as a camera, an ultrasonic sensor, and/or an infrared (IR) sensor.

In association with step 2 of FIG. 8a, the AVDS handover method through AVDS access control of a vehicle by the global AVDS server may further include notifying the RO of whether the SV is recognized in the drop-off area from the VO. The RO may notify the SV that the SV has been recognized in the drop-off area.

In association with step 3 of FIG. 8a, the AVDS handover method through AVDS access control of a vehicle by the global AVDS server may further include transmitting information notifying that a handover is ready from the VO to the VB and/or from the VB to the UB. The VO may notify the VB that the AVDS handover is ready, and the VB may notify the UB that the AVDS handover is ready.

In association with step 4 of FIG. 8a, the AVDS handover method through AVDS access control of a vehicle by the global AVDS server may further include enabling the user to get off the SV. The user may get off from the SV that has arrived at the drop-off area.

In association with step 5 of FIG. 8a, the AVDS handover method through AVDS access control of a vehicle by the global AVDS server may further include requesting a handover from the UB to the VB and/or the OB, from the OB to the RO, and from the VB to the VO. The UB, which has received a handover request input from the UF, may transmit the handover request to the VB and/or the OB. The OB may transmit the handover request to the RO, and the VB may transmit the handover request to the V.

In association with o step 6 of FIG. 8a, the AVDS handover method through AVDS access control of a vehicle by the global AVDS server may further include recording that there is a handover request from a user by the OB. The OB may record that there is a handover request from the user. If the handover fails at one time, multiple handover attempts may be recorded.

In association with step 7 of FIG. 8a, the AVDS handover method through AVDS access control of the vehicle by the global AVDS server may further include checking whether the handover is available. For example, the AVDS handover method may finally determine whether the RO and/or VO, etc. can perform the AVDS control operations. The environment capable of performing AVDS control operations may mean, for example, whether autonomous driving level 4 is supported.

In association with step 8 of FIG. 8a, the AVDS handover method through AVDS access control of the vehicle by the global AVDS server may further include determining whether the AVDS system by the OB has control authority. The OB may determine that the AVDS system possesses control authority.

In association with step 9 of FIG. 8a, the AVDS handover method through AVDS access control of a vehicle by the global AVDS server can notify the handover of control authority from the OB to the VB, RO, UB, and/or OS, and from the VB to V. The AVDS system may notify that the control authority has been handed over. For example, the OB may determine the system authority and transmit the control authority handover result to the VB, RO, UB, and OS. Here, when the RO receives the handover result, the RO may initiate remote control (autonomous parking) for the SV. The VB may record the control authority handover to the AVDS system. When the UB receives the handover result, the UB may notify the user of the control authority handover. For example, the UF may be displayed as UI/UX information to notify the user of the UI/UX information.

FIG. 8b illustrates an example in which steps 6 and 8 are performed by the OS other than the OB, as shown in FIG. 8a.

In association with step 5 of FIG. 8b, a handover from the OB to the OS may be requested in step 5. In association with step 6 of FIG. 8b, the OS may record that there is a handover request from the user. In association with step 8, it is possible to determine whether the AVDS system has the control authority by the OS.

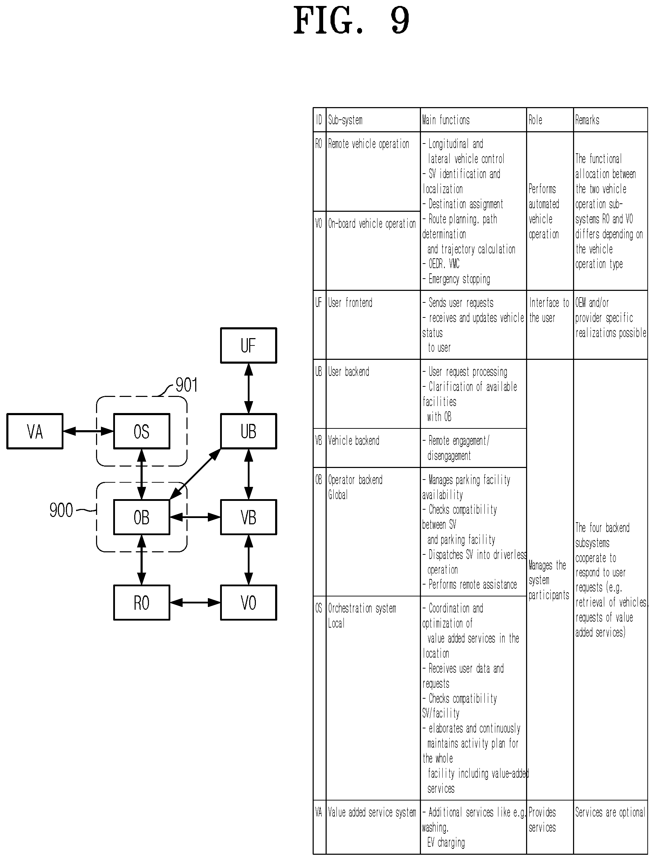

FIG. 9 is a diagram illustrating the configuration and functions of the AVDS server system according to the embodiments of the present disclosure.

FIG. 9 shows the major functions of the AVDS for each sub-system of the AVDS server system.

A remote vehicle operation (RO) has the role of autonomous vehicle control. Specifically, in relation to steering, movement, and vehicle dynamics, the RO has various functions, such as SV identification, destination assignment, route planning, OEDR, SV localization, path decision, trajectory calculation, vehicle motion control, emergency stop, etc.

In the same manner as an on-board vehicle operation (VO), the VO also has the same roles and functions as those of the RO. The allocation of functions between the RO and the VO sub-system may vary depending on the type of vehicle operations.

A user frontend (UF) has the role of a user interface. Specifically, the embodiments of the present disclosure may provide the function of sending user requests and receiving/updating the vehicle status. The UF function may vary depending on supplier's specifications.

The user backend (UB), the vehicle backend (VB), the operator backend (OB), the orchestrating system (OS), and the automated valet driving premises management (PM) may perform system management.

The UB may process user requests.

The VB has remote participation and/or release functions.

The OB 1000 has various functions related to parking facility availability management, checking compatibility between the SV and the parking facilities, unmanned driving control of the SV, remote support operations, etc.

The orchestrating system (OS) 1001 has a function of adjusting/optimizing service tasks at the corresponding location and a function of adjusting various services related to automated operations.

PM (Automated valet driving premises management) has functions related to management of environmental conditions and a response to incapacitation of operation functions.

Backend subsystems such as the UB, VB, and OB may cooperatively respond to a user request (e.g., a vehicle search request).

PM (Automated valet driving premises management) may adjust automated driving activities in facility areas.

VA (Value added service system) has an additional service role. The VA has functions such as additional services (e.g., car wash, charging, etc.). These services may be optional.

The OB may correspond to the global AVDS server, and the OS may correspond to the local AVDS server.

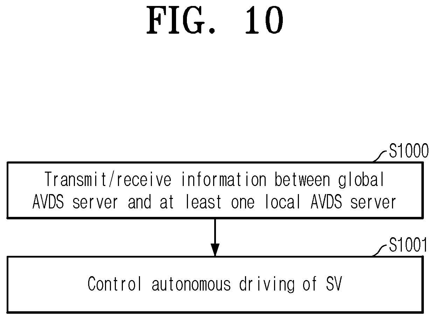

FIG. 10 is a flowchart illustrating a method for controlling AVDS access of a vehicle by the global AVDS server according to the embodiments of the present disclosure.

S1000: A method for controlling AVDS access of a vehicle by the global AVDS server may include transmitting and receiving information between a global AVDS server and a local AVDS server;

S1001: A method for controlling AVDS access of a vehicle by the global AVDS server may further include controlling autonomous parking of the SV.

Referring to FIG. 6, in association with the compatibility of AVDS reservation, the step (S1001) of controlling autonomous parking of the SV may include controlling AVDS reservation. The step of transmitting and receiving information between the global AVDS server and at least one local AVDS server may include, for AVDS reservation, by the global AVDS server, receiving a request for the availability from the UB. In this case, the availability may include at least one of a parking period or a service. The step of transmitting and receiving information between the global AVDS server and at least one local AVDS server may include: transmitting the request of the availability to at least one local AVDS server; receiving a request for compatibility data from at least one local AVDS server; transmitting the request of the compatibility data to the VB; and receiving compatibility data from the VB. Here, the compatibility data may include at least one of identification (ID) information, size information, or fuel type information for the SV; and transmitting the compatibility data to at least one local AVDS server.

Referring to FIG. 6, in association with a new reservation proposal of AVDS reservation, the step (S1001) of controlling autonomous driving of SV may include the step of controlling AVDS reservation. The step of transmitting and receiving information between the global AVDS server and at least one local AVDS server may include: for AVDS reservation, by the global AVDS server, receiving new reservation information from at least one local AVDS server. Here, the new reservation information may include at least one of reservation ID information, available timeslot information, service, and service cost; and transmitting the new reservation information to the UB; and receiving reservation confirmation information from the UB. Here, the reservation confirmation information may include at least one of reservation ID information, determined timeslot information, and determined service; and transmitting the reservation confirmation information to at least one local AVDS.

Referring to FIG. 7, in association with AVDS check-in, the step (S1001) of controlling autonomous driving of the SV may include controlling AVDS check-in. The step of transmitting and receiving information between the global AVDS server and at least one local AVDS server may include: for AVDS check-in, by the global AVDS server, receiving identification (ID) information about the SV from the RO (remote vehicle operation) that recognizes that the SV has arrived at a parking facility; transmitting the identification (ID) information about the SV to at least one local AVDS server and the UB; generating session ID information; and transmitting the session ID information to at least one local AVDS server.

Referring to FIG. 8, in association with AVDS handover, the step (S1001) of controlling autonomous driving of the SV may include controlling AVDS handover. The step of transmitting and receiving information between the global AVDS server and at least one local AVDS server may include: for AVDS check-in, by the global AVDS server, requesting handover of the SV to the RO (remote vehicle operation) by the global AVDS server; recording a handover request; checking a handover availability; determining that AVDS has the authority; and notifying at least one local AVDS server that authority has been handed over to AVDS.

The method of FIG. 10 is performed by a device 3000 for controlling AVDS access of a subject vehicle (SV) of a global AVDS server.

The global AVDS server for controlling AVDS access of the SV may include a transceiver 3001 that transmits and receives data about the AVDS access; a processor 3002 connected to the transceiver 3001; and a processor 3002 connected to a memory. Instructions stored in the memory may enable the processor to transmit and receive information between the global AVDS server and at least one local AVDS server; and may enable the processor to control autonomous driving of the SV. The global AVDS server may manage each local AVDS server, and may transmit and receive data to/from at least one of a Vehicle Backend (VB) or a User Backend (UB). At least one local AVDS server may operate as a sub-AVDS arranged for each region, and may perform data communication with at least one of the global AVDS server and the VA (value added system). The VA may include at least one of the charging station and the car wash.

According to the embodiments, the global AVDS can safely and effectively control AVDS access, such as reservation, check-in, handover, etc. of the SV.

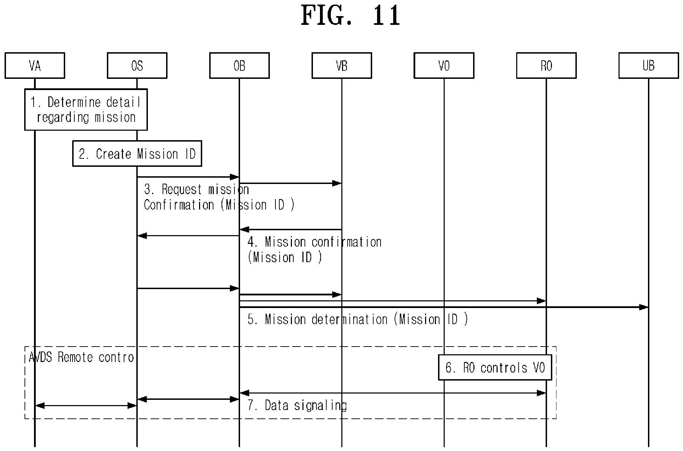

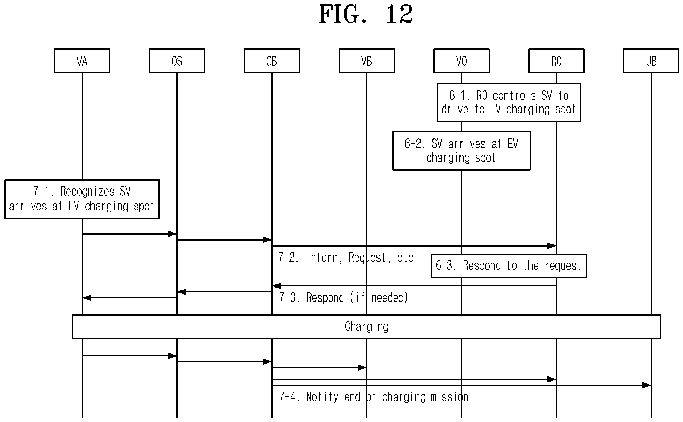

FIGS. 11 and 12 are diagrams illustrating example operations of the global AVDS server when charging the electric vehicle (EV) according to the embodiments of the present disclosure.

In association with step 1 of FIG. 11, a method for controlling the AVDS mission of the vehicle by the global AVDS server (OB of FIG. 11) may generate configuration (or setting) information regarding the mission. Specifically, through operation between the VA and the OS, detailed information about the mission can be determined and generated. To this end, the EV charging station, the EV charging spot, the charging timeslot, etc. for the mission can be determined based on information obtained at the time of reservation, such as the type of service or reservation time.

In addition, when necessary, data communication between the VA and the OS (local AVDS server) may be performed to establish the mission details.

In association with step 2 of FIG. 11, a method for controlling the AVDS mission of the vehicle by the global AVDS server (OB in FIG. 11) can generate a mission ID. Based on the details determined in step 1 described above, a mission ID for the mission can be created. When creating a mission ID, a mission ID can be created by considering the session ID that includes the mission indicated by the mission ID. In other words, a value of the mission ID can be created to be mapped to a value of the session ID.

Specifically, the VA and/or the OS (local AVDS server) may determine details about the mission, and the OS (local AVDS server) may generate a mission ID. In addition, when at least one local AVDS server (OS) generates a mission trigger and transmits the mission trigger to the global AVDS server (OB), the global AVDS server (OB) may generate a mission ID that identifies missions related to charging, car washing, and/or parking, etc.

In association with step 3 of FIG. 11, the method for controlling the AVDS mission of the vehicle by the global AVDS server (OB of FIG. 11) may perform a function of requesting mission confirmation. At least one local AVDS server (OS) may request mission confirmation from the global AVDS server (OB). The global AVDS server (OB) may request mission confirmation from the VB.

Specifically, the global AVDS server (OB) may receive, from the OS, a mission ID generated by the OS based on mutual data signaling between the VA and/or the OS. In addition, a mission ID may be generated by the OB based on mutual data signaling of the VA and/or the OS. The OB can transmit information for requesting mission confirmation to the VB. The VB may decide whether to confirm the mission based on information about the mission confirmation request. Information about the mission confirmation request may include a mission ID, etc.

In association with step 4 of FIG. 11, the method for controlling the AVDS mission of the vehicle by the global AVDS server (OB of FIG. 11) may confirm the mission. For example, the VB can notify OB of such mission confirmation. The OB can notify the OS of the mission confirmation. Specifically, the VB can transmit information confirming mission progress to the OS via the OB. Here, information confirming such mission progress may include a mission ID, etc.

In association with step (5) of FIG. 11, the method for controlling the AVDS mission of the vehicle by the global AVDS server (OB of FIG. 11) may determine the mission to be performed. For example, the OS may transmit, to the OB, information indicating that the mission has been decided. Likewise, the OB can transmit information indicating that the mission has been decided to the VB, RO, UB, etc. Here, information indicating that the mission has been decided may include a mission ID, etc.

In association with step 6 of FIG. 11, the method for controlling the AVDS mission of the vehicle by the global AVDS server (OB of FIG. 11) can control the VO by the RO. In association with step (6-1) of FIG. 12, the RO may control the SV so that the SV drives to the EV charging spot. Here, the RO may receive information about the EV charging spot from the VA through the OS and/or OB. In association with step (6-2) of FIG. 12, the SV may arrive at the EV charging spot. In association with step (6-1) of FIG. 12, the RO(VO) may respond to a request of the VA, etc. In response to the VA's request, the RO may modify the parking location and/or angle of the SV within the EV charging spot.

In association with step 7 of FIG. 11, the method for controlling the AVDS mission of the vehicle by the global AVDS server (OB of FIG. 11) can control data signaling operations. In association with step (7-1) of FIG. 12, the VA may recognize that the SV has arrived at the EV charging spot. Using ultrasonic waves, IR sensors, and/or cameras, the above-described method can recognize that the SV has arrived at the EV charging spot. The VA may collect information about the location at which the SV is parked in the EV charging spot and/or angles related to this location. Information about the location and/or angle of the EV parked in the charging spot may include the location of a center point of the SV, the angle between the SV and the central line of the parking spot, and the like.

In association with step (7-2) of FIG. 12, the VA may transmit notification information and/or request information to the RO through the OS and/or OB. For example, the VA may transmit, to the RO, notification information about the location at which the SV is parked in the EV charging spot and the angle related to this location. In addition, the VA may transmit a request to the RO such that the SV can modify the parking location within the EV charging spot and/or the angle. For example, when the angle between the SV and the center line of the EV charging spot is 5 degrees or more, the above-described method can transmit a request for modifying the parking location such that the angle is less than 5 degrees. The location and/or angle value required to be modified may be set in various ways depending on the charging spot and vehicle status.

Additionally, the VA may inform the RO that the EV charging spot has changed due to on-site circumstances. For example, the VA may request, from the RO, a response as to whether the VA agrees to perform charging at the changed EV charging spot.

In association with step (7-3) of FIG. 12, the RO may transmit a response to the request to the VA through the OB and OS. For example, in response to the VA's request, the RO may transmit a response as to whether the RO agrees to perform charging at the changed EV charging spot.

In association with step (7-4) of FIG. 12, when EV charging is performed and the EV has been completely charged, the OB may transmit a charging completion notification received from the VA and/or OS to the VB, RO, and/or UB.

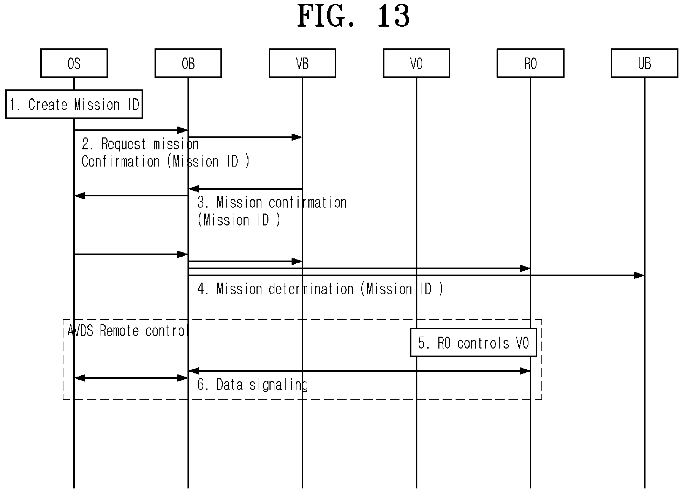

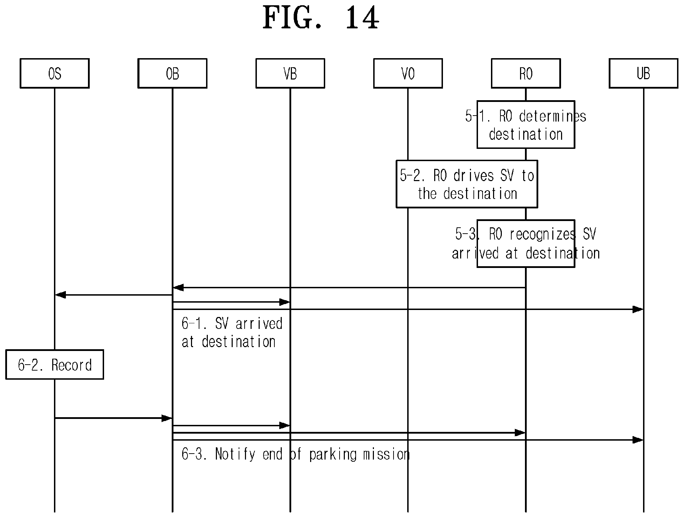

FIGS. 13 and 14 are diagrams illustrating example operations of the global AVDS server during parking according to embodiments of the present disclosure.

In association with step 1 of FIG. 13, a method for controlling the AVDS mission of the vehicle by the global AVDS server (OB of FIG. 13) may create a mission ID. Based on the details determined when reserving the SV, a mission ID representing the parking mission can be created. The mission ID can be generated by the local AVDS server (OS). The mission ID may be created by the global AVDS server (OB) based on a mission trigger by the local AVDS server (OS). When creating the mission ID, a session ID that includes a mission such as a parking function may also be considered. In other words, the mission ID value can be created to be mapped to the session ID value.

In association with step 2 of FIG. 13, the method for controlling the AVDS mission of the vehicle by the global AVDS server (OB of FIG. 13) may request mission confirmation. For example, the OS may request mission confirmation from the OB, and the OB may request mission confirmation from the VB.

Specifically, the OB may receive a mission ID created by the OS based on AVDS reservation information from the OS. The OB can transmit, to the VB, information to request mission confirmation. Here, information for requesting mission confirmation may include a mission ID, etc. The VB can decide whether to confirm the mission based on the information for requesting mission confirmation.

In association with step 3 of FIG. 13, the method for controlling the AVDS mission of the vehicle by the global AVDS server (OB of FIG. 13) can confirm the mission. For example, the VB can transmit mission confirmation information to the OB, and the OB can transmit mission confirmation information to the OS. Here, the mission confirmation information may include a mission ID, etc. Specifically, the VB may transmit mission confirmation information indicating mission progress confirmation to the OS via the OB.

In association with step 4 of FIG. 13, the method for controlling the AVDS mission of the vehicle by the global AVDS server (OB of FIG. 13) may determine the mission. For example, the OS may transmit mission decision information to the OB, and the OB may transmit mission decision information to the VB, RO, and/or UB. Mission decision information indicating that a decision has been made to perform the mission may be transmitted from the OS to the VB, RO, and/or UB through the OB. Here, the mission decision information may include a mission ID, etc.

In association with step 5 of FIG. 13, the method for controlling the AVDS mission of the vehicle by the global AVDS server (OB of FIG. 13) may enable the RO to control the VO. Specifically, in association with step (5-1) of FIG. 14, the RO may determine the destination where the SV will be parked. In association with step (5-2) of FIG. 14, the RO may control the SV to drive to the destination. At this time, the AVDS type may be Type 2. In association with step (5-3) of FIG. 14, the RO may recognize that the SV has arrived at the destination. For example, based on ultrasonic waves, IR sensors, cameras, etc., the RO may recognize whether the SV has arrived at the destination.

In association with step 6 of FIG. 13, the method for controlling the AVDS mission of the vehicle by the global AVDS server (OB of FIG. 13) may signal data for mission performance. Specifically, in association with step (6-1) of FIG. 14, the RO may recognize that the SV has arrived at the destination. The RO may notify the OB of information as to whether the SV has arrived at the destination, so that the OS, VB, UB, etc. can recognize whether the SV has arrived at the destination. When the RO recognizes that the SV has arrived at the destination, the RO may transmit, to the OB, information indicating whether the SV has arrived at the destination. Here, the information indicating whether the SV has arrived at the destination may include at least one of an SV ID, a mission ID, a session ID, and/or a destination arrival time.

In association with step (6-2) of FIG. 14, the method for controlling the AVDS mission of the vehicle by the global AVDS server (OB in FIG. 13) may enable the OS to record information about the SV when the SV has arrived at the destination. For example, the OS may store at least one of SV ID, mission ID, session ID, and/or destination arrival time.

In association with step (6-2) of FIG. 14, the method for controlling the AVDS mission of the vehicle by the global AVDS server (OB of FIG. 13) may include notification that the parking mission has been completed. For example, the OS may notify the OB of information indicating that the parking mission has been completed so that the VB, US, RO, etc. can recognize the completion of the parking mission. When parking is completed, the OS may transmit a parking completion notification to the VB, RO, and UB via the OB.

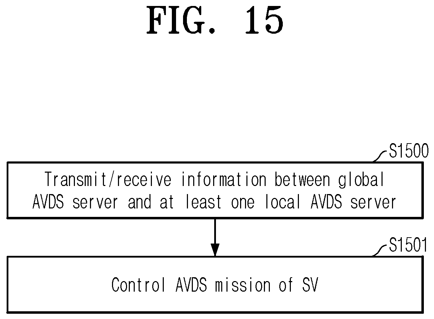

FIG. 15 is a flowchart illustrating a method for allowing the global AVDS server to control the AVDS mission to be performed by the SV according to the embodiments of the present disclosure.

Referring to FIG. 11, in step S1100, the method for allowing the global AVDS server to control the AVDS mission of the SV according to the embodiments of the present disclosure may include transmitting and receiving information to and from the global AVDS server and at least one local AVDS server.

In step S1101, the method for allowing the global AVDS server to control the AVDS mission of the SV according to the embodiments may further include controlling the AVDS mission of the SV.

The mission may include at least one of EV (Electric Vehicle) charging of the SV, car washing of the SV, or parking of the SV. The global AVDS server may manage each local AVDS server and transmit and receive data to/from at least one of VB (Vehicle Backend) or UB (User Backend). At least one local AVDS server is a sub-AVDS located in each region, and may transmit and receive data to/from at least one of the global AVDS server and the VA (Value Added system), and the VA may include at least one of a charging station for the SV or a car wash for the SV.

Referring to FIGS. 11 and 12, the step (1100) of transmitting and receiving information to/from the global AVDS server and at least one local AVDS server may include creating, by the global AVDS server, identification (ID) information for the EV charging mission based on the mission trigger of the at least local AVDS server. The identification (ID) information of the mission may be created through data communication between at least one local AVDS server and the VA.

Referring to FIGS. 11 and 12, at least one of the VS and at least one local AVDS server may determine at least one of a charging station, charging spot, or charging timeslot for EV charging based on at least one of a service type and a reservation time. The global AVDS server may transmit, to the VB, request information for deciding the mission, where the request information includes mission identification (ID) information. The VB may decide the mission for EV charging based on the mission's identification (ID) information. The global AVDS server may transmit mission decision information including mission identification (ID) information to the UB.

Referring to FIGS. 11 and 12, the step (S1101) of controlling the AVDS mission of the SV may include transmitting information related to at least one of the location or angle of the SV parked at the charging spot through the RO (remote vehicle operation); transmitting, to the RO, request information for modifying at least one of the parking location or angle of the SV parked at the charging spot when the parking location or angle of the SV needs to be changed; when the charging spot is changed, transmitting the change information of the charging spot to the RO; and requesting a response as to whether the SV will be charged at the changed charging spot.

Referring to FIGS. 11 and 12, the global AVDS server may receive, from the RO, a response as to whether the SV will be charged at the changed charging spot. When EV charging is completed, the global AVDS server may notify the VB, RO, and UB of mission completion information.

Referring to FIGS. 13 and 14, the step (S1100) of transmitting and receiving information to/from the global AVDS server and at least one local AVDS server may include creating, by the global AVDS server, identification (ID) information of a parkingrelated mission based on the mission trigger of the at least one local AVDS server. Here, the identification (ID) information of the parking may be created based on the information that has been decided when the SV reservation is made.

Referring to FIGS. 13 and 14, mission identification (ID) information may be transmitted to the VB, mission confirmation information including mission identification (ID) information may be received from the VB, and the mission confirmation information may be transmitted to at least one local AVDS server. Here, the mission decision information including mission identification (ID) information may be transmitted to at least one of the VB, the remote vehicle operation (RO), and the UB.

Referring to FIGS. 13 and 14, when the RO recognizes that the SV has arrived at the destination, the global AVDS server may receive, from the RO, information that receives at least one of the SV's identification information, mission identification information, session identification information related to the mission identification information, and information about the destination arrival time. When the parking mission has been completed, the global AVDS server may transmit a notification message indicating that the parking mission has been completed to at least one of VB, RO, or UB.

The method of FIG. 15 may be performed by the vehicle control device 3000 of FIG. 3. Here, the vehicle control device 3000 may correspond to the global AVDS server including an interface unit 3001 and/or at least one processor 3002. The interface unit 3001 may be referred to as a transceiver.

The global AVDS server 3000 for controlling the AVDS mission of the SV may include a transceiver 3001 that transmits and receives data about the AVDS mission; a processor 3003. The processor may perform data communication between the global AVDS server and at least one local AVDS server, and may control the AVDS mission of the SV. The mission may include at least one of a parking function and an EV charging and car wash function. The global AVDS server may manage each local AVDS server, may perform data communication with the VB (vehicle backend) or the UB (user backend). At least one local AVDS server may operate as a sub-AVDS arranged for each region, and may perform data communication with at least one of the global AVDS server and the VA (value added system). The VA may include at least one of the charging station and the car wash.

According to the embodiments, the global AVDS may contribute to the SV's AVDS mission (EV charging, parking, etc.) and provide the effect of allowing the SV to perform various missions efficiently and safely.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device includes a transmitter/receiver configured to transmit and receive media data, a memory configured to store instructions (program code, algorithms, flowcharts and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments. Additionally, the processor may be implemented as an encoder/decoder, etc. for the operations of the above-described embodiments.

### [Mode for Invention]

As described above, related contents have been described in the best mode for carrying out the embodiments.

### [Industrial Applicability]

As described above, the embodiments may be fully or partially applied to the automated valet driving device and system.

It will be apparent to those skilled in the art that various changes or modifications can be made to the embodiments within the scope of the embodiments.

Thus, it is intended that the embodiments cover the modifications and variations of this disclosure provided they come within the scope of the appended claims and their equivalents.

## Claims

1. A method for controlling automated valet driving system (AVDS) access of a subject vehicle (SV) by a global AVDS server, the method comprising:
transmitting and receiving information between a global AVDS server and at least one local AVDS server; and
controlling autonomous driving of the subject vehicle (SV);
wherein the global AVDS server manages each local AVDS server, transmits/receives data to/from at least one of a vehicle backend (VB) and a user backend (UB),
wherein the at least one local AVDS server is a sub-AVDS server and the at least one local AVDS server transmits/receives data to/from at least one of the global AVDS server or a value added system (VA),
wherein the VA includes at least one of a charging station for the SV and a car wash for the SV.

2. The method according to claim 1,
wherein the controlling of the autonomous driving of the subject vehicle (SV) includes controlling AVDS reservation; and
wherein the transmitting and receiving information between the global AVDS server and the at least one local AVDS server, for the AVDS reservation, by the global AVDS server, includes:
receiving a request for availability from the user backend (UB), wherein the availability includes at least one of a parking period or a service;
transmitting the request for availability to the at least one local AVDS server;
receiving a request for compatibility data from the at least one local AVDS server; transmitting the request for compatibility data to the vehicle backend (VB); receiving the compatibility data from the VB, wherein the compatibility data
includes at least one of identification (ID) information, size information, or fuel type information for the subject vehicle (SV); and
transmitting the compatibility data to the at least one local AVDS server.

3. The method according to claim 1,
wherein the controlling of the autonomous driving of the SV includes controlling AVDS reservation; and
wherein the transmitting and receiving information between the global AVDS server and the at least one local AVDS server, for the AVDS reservation, by the global AVDS server, includes:
receiving new reservation information from the at least one local AVDS server, wherein the new reservation information includes at least one of reservation identification (ID) information, available timeslot information, a service, and a service cost;
transmitting the new reservation information to the user backend (UB);
receiving reservation confirmation information from the user backend (UB), wherein the reservation confirmation information includes at least one of the reservation identification (ID) information, determined timeslot information, and determined service; and
transmitting the reservation confirmation information to the at least one local AVDS.

4. The method according to claim 1,
wherein the controlling of the autonomous driving of the subject vehicle (SV) includes AVDS check-in; and
wherein the transmitting and receiving information between the global AVDS server and the at least one local AVDS server, for the AVDS check-in, by the global AVDS server, includes:
receiving identification (ID) information about the SV from a remote vehicle operation (RO) that recognizes that the SV has arrived at a parking facility;
transmitting identification (ID) information about the SV to the at least one local AVDS server and the user backend (UB);
generating session identification (ID) information; and
transmitting the session identification (ID) information to the at least one local AVDS server.

5. The method according to claim 1,
wherein the controlling of the autonomous driving of the subject vehicle (SV) includes AVDS check-in; and
wherein the transmitting and receiving information between the global AVDS server and the at least one local AVDS server, for the AVDS check-in, by the global AVDS server, includes:
receiving identification (ID) information about the SV from a remote vehicle operation (RO) that recognizes that the SV has arrived at a parking facility;
transmitting identification (ID) information about the SV to the at least one local AVDS server and the UB;
receiving session identification (ID) information from the at least one local AVDS server; and
transmitting the session identification (ID) information to the at least one local AVDS server.

6. The method according to claim 1,
wherein the controlling of the autonomous driving of the subject vehicle (SV) includes AVDS handover; and
wherein the transmitting and receiving information between the global AVDS server and the at least one local AVDS server, for the AVDS handover, by the global AVDS server, includes:
requesting a handover of the SV to a remote vehicle operation (RO);
recording a handover request;
verifying handover availability;
determining that the AVDS has authority; and
notifying the at least one local AVDS server that authority has been handed over to the AVDS.

7. The method according to claim 1,
wherein the controlling of the autonomous driving of the subject vehicle (SV) includes AVDS handover; and
wherein the transmitting and receiving information between the global AVDS server and the at least one local AVDS server, for the AVDS handover, by the global AVDS server, includes:
requesting a handover of the SV to at least one of a remote vehicle operation (RO) or the at least one local AVDS server, wherein the handover request is recorded by the at least one local AVDS server;
verifying handover availability;
receiving a result indicating that the AVDS has authority from the at least one local AVDS server; and
notifying at least one of the VB, the RO, or the UB that authority has been handed over.

8. The method according to claim 1, further comprising:
controlling an AVDS mission of the subject vehicle (SV),
wherein the AVDS mission includes at least one of electric vehicle (EV) charging, car wash or a parking for the SV.

9. The method according to claim 8, wherein the transmitting and receiving information between the global AVDS server and the at least one local AVDS server includes:
based on a mission trigger of the at least one local AVDS server, generating, by the global AVDS server, identification (ID) information of the mission for the EV charging,
wherein the identification (ID) information of the mission is generated through data communication between the at least one local AVDS server and the value added system (VA).

10. The method according to claim 9,
wherein at least one of the at least one local AVDS server and the value added system (VA) is configured to determine at least one of a charging station, charging spot, and charging time slot for the electric vehicle (EV) charging based on at least one of a service type and a reservation time,
wherein the global AVDS server is configured to transmit, to the vehicle backend (VB), request information required to decide a mission including the identification (ID) information of the mission,
wherein the vehicle backend (VB) is configured to determine the mission for the EV charging based on the identification (ID) information of the mission, and
wherein the global AVDS server is configured to transmit, to the user backend (UB), mission decision information including the identification (ID) information of the mission.

11. The method according to claim 10, wherein the controlling of the AVDS mission of the subject vehicle (SV) includes:
transmitting, to a remote vehicle operation (RO), information related to at least one of a parking location or angle of the subject vehicle (SV) parked at the charging spot; and
at least one of:
when the parking location or angle needs to be changed, transmitting, to the RO, request information for changing at least one of the parking location and angle of the SV parked at the charging spot; or
when the charging spot is changed, transmitting, to the RO, change information of the charging spot, and requesting a response as to whether to charge the subject vehicle (SV) at the changed charging spot.

12. The method according to claim 11,
wherein the global AVDS server is configured to receive, from the RO, a response as to whether to charge the subject vehicle (SV) at the changed charging spot, and
wherein, when the EV charging is completed, the global AVDS server is configured to notify the VB, the RO, and the UB of mission completion information.

13. The method according to claim 8, wherein the transmitting and receiving information between the global AVDS server and the at least one local AVDS server includes:
based on a mission trigger of the at least one local AVDS server, generating, by the global AVDS server, identification (ID) information of a mission for the parking,
wherein the identification (ID) information of the mission for the parking is generated through information decided when reservation of the SV is performed.

14. An apparatus for controlling automated valet driving system (AVDS) access of a subject vehicle (SV) of a global automated valet driving system (AVDS) server, the apparatus comprising:
a transceiver configured to transmit and receive data related to the AVDS access;
a memory connected to the transceiver; and
a processor connected to the memory,
wherein instructions stored in the memory enable the processor to:
control the transceiver to transmit and receive information between a global AVDS server and at least one local AVDS server; and
control autonomous driving of the subject vehicle (SV),
wherein the global AVDS server manages each local AVDS server, transmits/receives data to/from at least one of a vehicle backend (VB) and a user backend (UB),
wherein the at least one local AVDS server is a sub-AVDS server and the at least one local AVDS server transmits/receives data to/from at least one of the global AVDS server or a value added system (VA),
wherein the VA includes at least one of a charging station for the SV and a car wash for the SV.

15. The apparatus according to claim 14,
wherein the processor is further configured to control an AVDS mission of the subject vehicle (SV), and
wherein the mission includes at least one of electric vehicle (EV) charging, car wash or a parking for the SV.
